(19) Europäisches Patentamt

European Patent Office

Office européen des brevets

(11) **EP 3 859 828 B1**

(12) # EUROPEAN PATENT SPECIFICATION

(45) Date of publication and mention of the grant of the patent:
**05.04.2023 Bulletin 2023/14**

(21) Application number: **19868032.4**

(22) Date of filing: **10.09.2019**

(51) International Patent Classification (IPC):
$H01M\ 4/134^{(2010.01)}$  $H01M\ 4/36^{(2006.01)}$
$H01M\ 4/38^{(2006.01)}$  $H01M\ 4/133^{(2010.01)}$
$H01M\ 4/587^{(2010.01)}$  $H01M\ 4/62^{(2006.01)}$
$H01M\ 10/0525^{(2010.01)}$  $H01M\ 4/02^{(2006.01)}$

(52) Cooperative Patent Classification (CPC):
**H01M 4/364; H01M 4/133; H01M 4/134;
H01M 4/386; H01M 4/587; H01M 4/62;
H01M 10/0525;** H01M 2004/027; Y02E 60/10

(86) International application number:
**PCT/JP2019/035426**

(87) International publication number:
**WO 2020/066576 (02.04.2020 Gazette 2020/14)**

(54) **NONAQUEOUS ELECTROLYTE SECONDARY BATTERY NEGATIVE ELECTRODE AND NONAQUEOUS ELECTROLYTE SECONDARY BATTERY**

NEGATIVE ELEKTRODE EINER SEKUNDÄRBATTERIE MIT WASSERFREIEM ELEKTROLYT UND SEKUNDÄRBATTERIE MIT WASSERFREIEM ELEKTROLYT

ÉLECTRODE NÉGATIVE DE BATTERIE SECONDAIRE À ÉLECTROLYTE NON AQUEUX, ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2018 JP 2018179772**

(43) Date of publication of application:
**04.08.2021 Bulletin 2021/31**

(73) Proprietor: **Panasonic Intellectual Property Management Co., Ltd.**
**Osaka-shi, Osaka 540-6207 (JP)**

(72) Inventors:
• **IWAMI, Yasunobu**
**Osaka-shi, Osaka 540-6207 (JP)**
• **NISHIDA, Nobumichi**
**Osaka-shi, Osaka 540-6207 (JP)**

• **MORIKAWA, Takaharu**
**Osaka-shi, Osaka 540-6207 (JP)**
• **YOKOI, Mai**
**Osaka-shi, Osaka 540-6207 (JP)**
• **NAKAMORI, Toshiyuki**
**Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(56) References cited:
**EP-A1- 2 559 660**    **EP-A1- 3 038 193**
**WO-A1-2017/085902**    **WO-A1-2018/123751**
**JP-A- 2009 205 950**    **JP-A- 2013 041 826**
**JP-A- 2017 168 378**    **US-A1- 2017 309 950**

**Description**

TECHNICAL FIELD

The present disclosure relates to a negative electrode for a non-aqueous electrolyte secondary battery, and a non-aqueous electrolyte secondary battery.

BACKGROUND ART

As a negative electrode active material for a non-aqueous electrolyte secondary battery, a Si-based active material containing silicon (Si) or a carbon-based active material such as graphite is used. It is known that Si-based active materials may absorb more lithium ions per unit mass than carbon-based active materials such as graphite. In particular, a Si-based active material in which Si particles are dispersed in an oxide phase is suitable for the negative electrode active material of a non-aqueous electrolyte secondary battery because the volume change due to lithium ion absorption is smaller than when Si is used alone. For example, PATENT LITERATURES 1 and 2 disclose a negative electrode active material for a non-aqueous electrolyte secondary battery in which Si particles are dispersed in a composite oxide phase represented by $Li_{2z}SiO_{(2+z)}$ (0 <z <2).

CITATION LIST

PATENT LITERATURE

PATENT LITERATURE 1: International Publication No. WO 2016/035290
PATENT LITERATURE 2: International Publication No. WO 2016/121321

Further, the documents US 2017/309950 A1, EP 3 038 193 A1, WO 2017/085902 A1 and WO 2018/123751 A1 all disclose a negative electrode for a non aqueous secondary battery comprising a carbon-based active material and a Si-based active material in which Si particles are dispersed in an oxide phase (lithium silicate and/or SiOx). However, those documents are silent about having two different Si-based active material, one with more Si particles, which presents a higher D50. And the document EP 2 559 660 A1 discloses a negative electrode exclusively containing a Si-based active material with two different types of silicon oxide particles, but no Si particles dispersed therein, and no carbon-based active material.

SUMMARY

TECHNICAL PROBLEM

The improvement of the charging and discharging cycle characteristics of non-aqueous electrolyte secondary batteries, such as lithium-ion batteries, is an important issue, and there is a particular need to improve the cycle characteristics while increasing the capacity. The techniques disclosed in PATENT LITERATURES 1 and 2 have room for improvement in terms of both battery capacity and cycle characteristics.

SOLUTION TO PROBLEM

The negative electrode for a non-aqueous electrolyte secondary battery, which is one aspect of the present disclosure, is a negative electrode for a non-aqueous electrolyte secondary battery including, as the negative electrode active material, a carbon-based active material and a Si-based active material in which Si particles are dispersed in an oxide phase containing at least silicon (Si), and the Si-based active material includes a first Si-based active material and a second Si-based active material. The first Si-based active material has a larger volume-based median diameter and a higher content of the Si particles than the second Si-based active material.
The non-aqueous electrolyte secondary battery, which is one aspect of the present disclosure, comprises the negative electrode, the positive electrode, and the non-aqueous electrolyte.

ADVANTAGEOUS EFFECTS OF INVENTION

The negative electrode, which is one aspect of the present disclosure, may provide a non-aqueous electrolyte secondary battery having excellent charging and discharging cycle characteristics.

BRIEF DESCRIPTION OF DRAWING

FIG. 1 is a perspective view of a non-aqueous electrolyte secondary battery, which is an example of an embodiment.
FIG. 2 is a partial cross sectional plan view of an electrode assembly, which is an example of an embodiment.
FIG. 3 is a partial cross sectional plan view of a negative electrode, which is an example of an embodiment.

DESCRIPTION OF EMBODIMENTS

The inventors have found that the charging and discharging cycle characteristics are greatly improved by using two Si-based active materials as the negative electrode active material, where the content of Si particles in the first Si-based active material > the content of Si particles in the second Si-based active material and the median diameter of the first Si-based active material > the median diameter of the second Si-based active material. According to the negative electrode according to the present disclosure, it is possible to improve the cycle characteristics while increasing the capacity.

The reason for improving the cycle characteristics of the negative electrode according to the present disclosure is presumed as follows. In Si-based active materials, it is the Si particles that reversibly absorb and release lithium ions. When the first Si-based active material with larger particle size and the second Si-based active material with smaller particle size are used as the negative electrode active material, the lithium ion release reaction of the second Si-based active material, which has a larger specific surface area than the first Si-based active material, proceeds preferentially. As a result, the first Si-based active material has a shallower depth of discharge than the second Si-based active material. Although the first Si-based active material has a higher content of Si particles, the depth of discharge is shallower, thus deterioration due to the cycle is suppressed. On the other hand, the second Si-based active material has a deeper discharge depth, but the content of Si particles is lower, thus deterioration due to cycling is suppressed. Therefore, use of the negative electrode according to the present disclosure improves the cycle characteristics while maintaining the content of Si particles in the entire Si-based active material as compared with the negative electrode containing the Si-based active material having the same Si content among the particles.

With reference to the drawings, an example of the embodiment of the present disclosure will be described in detail below, but the disclosure is not limited to the embodiments described below. In the following, as the non-aqueous electrolyte secondary battery, a laminated battery (non-aqueous electrolyte secondary battery 10) comprising the external packaging 11 composed of the laminated sheets 11a and 11b will be illustrated. However, the non-aqueous electrolyte secondary battery according to the present disclosure may be a cylindrical battery comprising a cylindrical battery case, a square battery comprising a square battery case, or the like, and the form of the battery is not particularly limited.

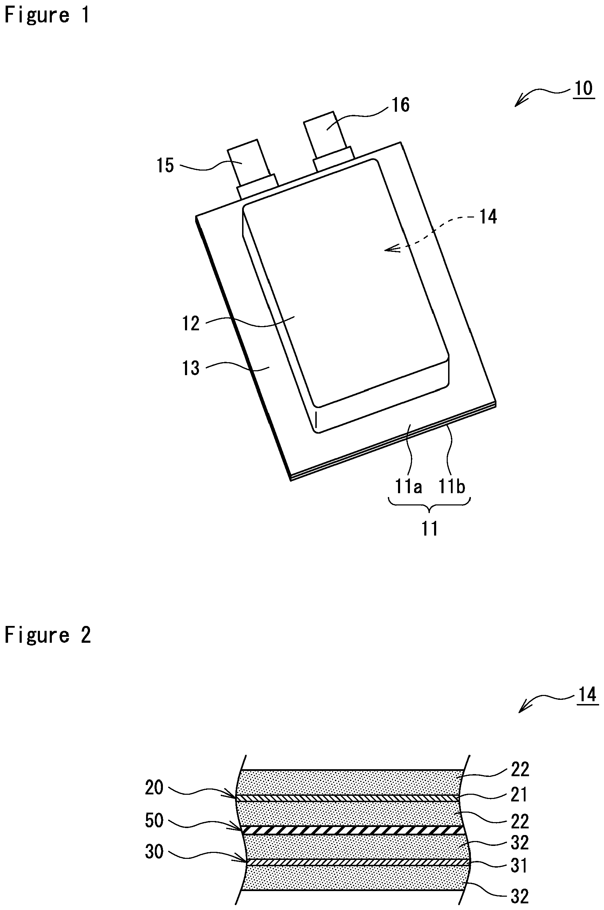

FIG. 1 is a perspective view of the non-aqueous electrolyte secondary battery 10, which is an example of the embodiment, and FIG. 2 is a partial cross sectional plan view of an electrode assembly 14 for forming the non-aqueous electrolyte secondary battery 10. As illustrated in FIGS. 1 and 2, the non-aqueous electrolyte secondary battery 10 comprises an electrode assembly 14 and a non-aqueous electrolyte, and these are housed in a housing part 12 of the external packaging 11. A sheet comprising a metal layer and a resin layer laminated together is used for the laminated sheets 11a and 11b. The laminated sheets 11a and 11b have, for example, two resin layers sandwiching a metal layer, and the one resin layer is made of a heat-weldable resin. An example of a metal layer is an aluminum layer.

The external packaging 11 has, for example, an approximately rectangular shape in a plan view. A sealed part 13 is formed in the external packaging 11 by joining the laminated sheets 11a and 11b together, thereby sealing the housing part 12 in which the electrode assembly 14 is housed. The sealed part 13 is formed in a frame shape with approximately the same width along the edge of the external packaging 11. The approximately rectangular portion in the plan view surrounded by the sealed part 13 is the housing part 12. The housing part 12 is provided by forming a recess capable of accommodating the electrode assembly 14 in at least one of the laminated sheets 11a and 11b. In the present embodiment, the recess is formed in the laminated sheet 11a.

The non-aqueous electrolyte secondary battery 10 comprises a pair of electrode leads (positive electrode lead 15 and negative electrode lead 16) connected to the electrode assembly 14. Each electrode lead is drawn from the interior of the external packaging 11. In the example shown in FIG. 1, each electrode lead is drawn from the same end edge of the external packaging 11 in an approximately parallel manner to each other. The positive electrode lead 15 and the negative electrode lead 16 are both conductive thin plates. For example, the positive electrode lead 15 is made of a metal mainly composed of aluminum, and the negative electrode lead 16 is made of a metal mainly composed of copper or nickel.

The electrode assembly 14 comprises a positive electrode 20, a negative electrode 30, and a separator 50 interposed between the positive electrode 20 and the negative electrode 30, as shown in FIG. 2. The electrode assembly 14 has a winding structure in which, for example, the positive electrode 20 and the negative electrode 30 are wound through the separator 50, and is a radially pressed flat wound electrode assembly. The negative electrode 30 is formed to have a size one size larger than that of the positive electrode 20 in order to suppress the precipitation of lithium. The electrode assembly may be a stack type in which a plurality of positive electrodes and a plurality of negative electrodes are alternately stacked via separators one by one unit cell.

The non-aqueous electrolyte includes a non-aqueous solvent and an electrolyte salt dissolved in the non-aqueous solvent. As the non-aqueous solvent, for example, esters, ethers, nitriles, amides, and mixtures of two or more of these solvents may be used. The non-aqueous solvent may contain a halogen substituent in which at least a part of hydrogen in these solvents is substituted with a halogen atom such as fluorine. For example, 0.5 to 5% by mass of fluoroethylene carbonate may be added to the total mass of the non-aqueous electrolyte. In addition, 1 to 5% by mass of vinylene carbonate may be added to the total mass of the non-aqueous electrolyte. The non-aqueous electrolyte is not limited to the liquid electrolyte, and may be a solid electrolyte. As the electrolyte salt, a lithium salt such as $LiPF_6$ is used.

The positive electrode 20, the negative electrode 30, and the separator 50 which constitutes the electrode assembly 14 will be described in detail below, and in particular, the negative electrode 30 will be described in detail.

[Positive Electrode]

The positive electrode 20 comprises a positive electrode core body 21 and a positive electrode mixture layer 22 formed on both sides of the positive electrode core body 21. For the positive electrode core body 21, a foil of a metal stable in the potential range of the positive electrode 20, such as aluminum or an aluminum alloy, a film in which the metal is arranged on the surface layer, or the like can be used. The positive electrode mixture layer 22 includes a positive electrode active material, a conductive agent, and a binder, and is preferably formed on both sides of the positive electrode core body 21. The positive electrode 20 can be produced by applying a positive electrode mixture slurry including a positive electrode active material, a conductive agent, a binder, and the like on the positive electrode core body 21, drying the coating film, and then compressing it to form the positive electrode mixture layer 22 on both sides of the positive electrode core body 21. The positive electrode mixture layer 22 may be formed only on one side of the positive electrode core body 21.

The positive electrode active material is mainly composed of a lithium-containing metal composite oxide. The elements contained in the lithium-containing metal composite oxides include Ni, Co, Mn, Al, B, Mg, Ti, V, Cr, Fe, Cu, Zn, Ga, Sr, Zr, Nb, In, Sn, Ta, and W. An example of a suitable lithium-containing metal composite oxide is a composite oxide containing at least one of Ni, Co, Mn, and Al. Inorganic compound particles such as aluminum oxide, lanthanoid-containing compounds, and the like may be fixed to the particle surface of the lithium-containing metal composite oxide.

Examples of the conductive agent included in the positive electrode mixture layer 22 include carbon materials such as carbon black, acetylene black, ketjen black, and graphite. Examples of the binder included in the positive electrode mixture layer 22 include fluororesins such as polytetrafluoroethylene (PTFE) and polyvinylidene fluoride (PVdF), polyacrylonitrile (PAN), polyimides, acrylic resins, and polyolefins. These resins may be used in combination with cellulose derivatives such as carboxymethyl cellulose (CMC) or salts thereof, polyethylene oxide (PEO) and the like.

[Negative Electrode]

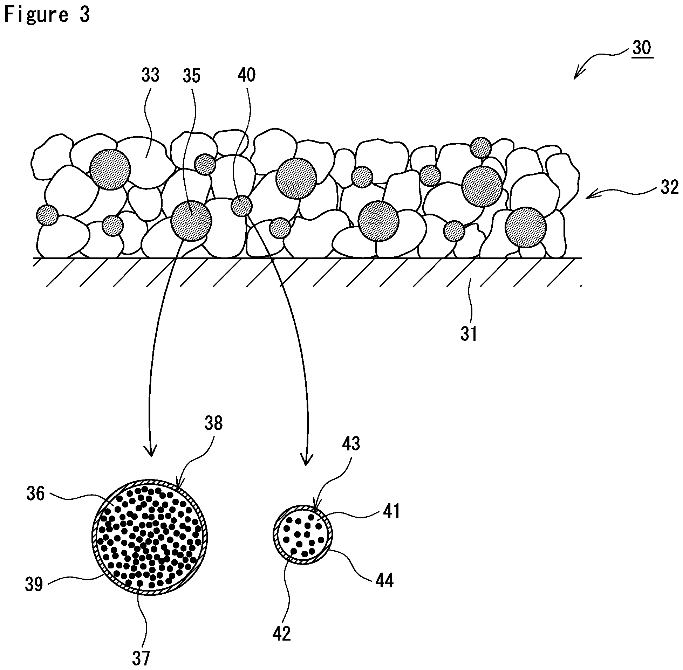

FIG. 3 is a partial cross sectional plan view of the negative electrode 30, which is an example of the embodiment. As illustrated in FIG. 3, the negative electrode 30 comprises a negative electrode core body 31 and a negative electrode mixture layer 32 formed on both sides of the negative electrode core body 31. For the negative electrode core body 31, a foil of a metal stable in the potential range of the negative electrode 30 such as copper or a copper alloy, a film in which the metal is arranged on the surface layer, or the like may be used. The negative electrode mixture layer 32 includes a negative electrode active material and a binder, and is preferably formed on both sides of the negative electrode core body 31. The negative electrode 30 can be produced by applying a negative electrode mixture slurry including a negative electrode active material, a binder, and the like on the negative electrode core body 31, drying the coating film, and then compressing it to form the negative electrode mixture layer 32 on both sides of the negative electrode core body 31. The negative electrode mixture layer 32 may be formed only on one side of the negative electrode core body 31.

As the binder included in the negative electrode mixture layer 32, a fluororesin such as PTFE or PVdF, PAN, polyimide, acrylic resin, polyolefin or the like may be used as in the case of the positive electrode 20, but preferably styrene-butadiene rubber (SBR) is used. The negative electrode mixture layer 32 may include CMC or a salt thereof, polyacrylic acid (PAA) or a salt thereof, polyvinyl alcohol (PVA) and the like. The negative electrode mixture layer 32 includes, for example, SBR and CMC or a salt thereof.

The negative electrode mixture layer 32 includes, as the negative electrode active material, a carbon-based active material 33 and a Si-based active material in which Si particles are dispersed in an oxide phase containing at least silicon (Si). The Si-based active material includes a Si-based active material 35 (first Si-based active material) and a Si-based active material 40 (second Si-based active material). As will be described in detail later, the Si-based active material 35 has a larger median diameter and a higher content of Si particles than the Si-based active material 40. By using the two Si-based active materials 35 and 40, the charging and discharging cycle characteristics of the battery are greatly improved.

Since the Si-based active materials 35 and 40 can absorb more lithium ions than the carbon-based active material 33, the capacity of the battery can be increased by using the Si-based active materials 35 and 40 as the negative electrode active material. However, since the Si-based active materials 35 and 40 have a larger volume change due to charging and discharging than the carbon-based active material 33, the carbon-based active material 33 and the Si-based active materials 35 and 40 are preferably used together in order to secure good cycle characteristics while increasing the capacity.

The carbon-based active material 33 includes graphites that have been conventionally used as negative electrode active materials, for example, natural graphites such as scaly graphite, massive graphite, and earthy graphite, as well as artificial graphites such as massive artificial graphite (MAG) and mesocarbon microbeads (MCMB). The volume-based median diameter of graphite is, for example, 18 to 24 $\mu$m. The volume-based median diameter is a particle size at which the volume integrated value is 50% in the particle size distribution measured by the laser diffraction scattering method, and is also called a 50% particle size (D50) or a median diameter. Hereinafter, unless otherwise specified, D50 means a volume-based median diameter.

The content of the Si-based active materials 35 and 40 is preferably 2 to 20% by mass, more preferably 3 to 15% by mass, and particularly preferably 4 to 10% by mass based on the total mass of the negative electrode active material. That is, the mixing ratio of the carbon-based active material 33 and the Si-based active material is preferably 98: 2 to 80:20, more preferably 97: 3 to 85:15, and especially preferably 96: 4 to 90:10 by mass ratio. When the mass ratio of the carbon-based active material 33 and the Si-based active material is within the above range, it becomes easy to improve the cycle characteristics while increasing the capacity.

The Si-based active material 35 includes an oxide phase 36 containing at least Si and Si particles 37, and is a particle having a structure in which the Si particles 37 are dispersed in the oxide phase 36. The Si-based active material 35 includes a conductive coating 39 that covers the surface of the mother particles 38 composed of the oxide phase 36 and the Si particles 37. Similarly, the Si-based active material 40 includes an oxide phase 41 containing at least Si and a Si particle 42, and is a particle having a structure in which the Si particles 42 are dispersed in the oxide phase 41. The Si-based active material 40 includes a conductive coating 44 that covers the surface of the mother particles 43 composed of the oxide phase 41 and the Si particles 42.

Preferably, the Si particles 37 and 42 are approximately uniformly dispersed in the oxide phases 36 and 41, respectively. The mother particles 38 and 43 have a sea-island structure in which fine Si particles 37 and 42 are dispersed in the oxide phases 36 and 41, respectively, and in an arbitrary cross-section, the Si particles 37 and 42 are scattered approximately uniformly without being unevenly distributed in some areas. The average particle size of the Si particles 37 and 42 is preferably 200 nm or less, and more preferably 100 nm or less. The average particle size of the Si particles 37 and 42 is measured by observing the cross section of the negative electrode mixture layer 32 using a scanning electron microscope (SEM) or a transmission electron microscope (TEM). Specifically, it is obtained by measuring the circumscribed circle diameters of arbitrary 100 particles selected from SEM or TEM images and averaging the measured values.

The content of Si particles 37 in the Si-based active material 35 is higher than the content of Si particles 42 in the Si-based active material 40, as described above. The content of the Si particles 37, that is, the content of the Si particles 37 based on the mass of the mother particles 38 is preferably 40 to 70% by mass, and more preferably 40 to 60% by mass. The content of the Si particles 42, that is, the content of the Si particles 42 based on the mass of the mother particles 43 is preferably 20 to 40% by mass, and more preferably 25 to 35% by mass. For example, the content of Si particles 37 is 40% by mass or more, and the content of Si particles 42 is less than 40% by mass.

The median diameter of the Si-based active material 35 is larger than the median diameter of the Si-based active material 40 in both the volume basis and the number basis. The D50 of the Si-based active material 35 is larger than the D50 of the Si-based active material 40, preferably 7 $\mu$m to 20 $\mu$m, and more preferably 8 $\mu$m to 15 $\mu$m. The D50 of the Si-based active material 40 is preferably 2 $\mu$m to 7 $\mu$m, and more preferably 3 $\mu$m to 6 $\mu$m. The D50 of the Si-based active materials 35 and 40 are smaller than, for example, the D50 of the carbon-based active material 33. Two peaks are preferably present in the particle size distribution of the mixture of Si-based active materials 35 and 40.

In other words, in the negative electrode 30, two Si-based active materials are used as the negative electrode active material, which satisfy the following conditions: the content of Si particles 37 in the Si-based active material 35 > the content of Si particles 42 in the Si-based active material 40, and the median diameter of the Si-based active material 35 > the median diameter of the Si-based active material 40. As a result, compared with the case where only one of the Si-based active materials 35 and 40 is used, or where the conditions for the content of the Si particles or the median diameter are not met, the charging and discharging cycle characteristics are greatly improved, and both battery capacity and cycle characteristics can be satisfied.

The oxide phases 36 and 41 contain a metal oxide containing at least Si as a main component (the component having the largest mass) and are composed of a set of particles finer than the Si particles 37 and 42. The oxide phases 36 and 41 contain, for example, at least one of lithium silicate (lithium silicate) and silicon oxide as main components. The oxide phases 36 and 41 may be oxide phases containing Li, Si, Al, and B. For example, the content of Li may be 5 to 20 mol%, the content of Si may be 50 to 70 mol%, the content of Al may be 12 to 25 mol%, and the content of B may be 12 to 25 mol% based on the total number of moles of the elements excluding O contained in the oxide phases 36 and 41. In this case, when the Si-based active materials 35 and 40 are added to the negative electrode mixture slurry, dissolution of the components of the oxide phase 36 into water may be suppressed.

The lithium silicate is represented, for example, by $Li_{2z}SiO_{(2+z)}$ (0 <z <2) and does not contain $Li_4SiO_4$ (z = 2). $Li_4SiO_4$ is an unstable compound and reacts with water to show alkalinity. Therefore, Si is altered to cause a decrease in charging and discharging capacity. Lithium silicate preferably contains $Li_2SiO_3$ (z = 1) or $Li_2Si_2O_5$ (z = 1/2) as a main component from the viewpoints of stability, ease of production, lithium ion conductivity, and the like. When $Li_2SiO_3$ or $Li_2Si_2O_5$ is the main component, the content of the main component is preferably more than 50% by mass, more preferably 80% by mass or more based on the total mass of the oxide phases 36 and 41, and may be substantially 100% by mass.

The silicon oxide is, for example, silicon dioxide (silica). When the oxide phases 36 and 41 contain silicon dioxide as a main component, the Si-based active materials 35 and 40 have a structure in which Si particles 37 and 42 are dispersed in, for example, an amorphous $SiO_2$ matrix, and are represented by $SiO_x$ ($0.5 \le x \le 1.5$).

Both of the oxide phases 36 and 41 may be a lithium silicate phase, or both may be a silicon oxide phase. Preferably, the oxide phase 36 contains lithium silicate as a main component, and the oxide phase 41 contains silicon oxide as a main component. That is, the Si-based active material 35 is a particle in which Si particles 37 are dispersed in the lithium silicate phase, and the Si-based active material 40 is a particle in which Si particles 42 are dispersed in the silicon oxide phase. In this case, the effect of improving the cycle characteristics of the battery becomes more remarkable.

The Si-based active materials 35 and 40 may be composed of only the mother particles 38 and 43, but preferably have the conductive coatings 39 and 44 made of a material having a higher conductivity than the oxide phases 36 and 41 on the surface of the particles. The conductive material for forming the conductive coatings 39 and 44 is at least one selected from the group consisting of, for example, a carbon material, a metal, and a metal compound. Among them, a carbon material is used most preferably. Examples of the method of carbon-coating the surface of the mother particles 38 and 43 include a CVD method using acetylene, methane or the like, and a method of mixing coal pitch, petroleum pitch, phenol resin or the like with the mother particles 38 and 43 and performing heat treatment. A carbon coating layer may be also formed by fixing a conductive agent such as carbon black or ketjen black to the surface of the mother particles 38 and 43 using a binder.

The conductive coatings 39 and 44 are formed, for example, by covering approximately the entire surface of the mother particles 38 and 43. The thickness of the conductive coatings 39 and 44 is preferably 1 to 200 nm, and more preferably 5 to 100 nm, in consideration of ensuring conductivity and diffusivity of lithium ions to the mother particles 38 and 43. If the thickness of the conductive coatings 39 and 44 becomes too thin, the conductivity decreases and it becomes difficult to uniformly coat the mother particles 38 and 43. On the other hand, if the thickness of the conductive coatings 39 and 44 becomes too thick, the diffusion of lithium ions into the mother particles 38 and 43 is inhibited and the capacity tends to decrease. The thicknesses of the conductive coatings 39 and 44 can be measured by observing the cross section of the particles using SEM, TEM, or the like.

The Si-based active materials 35 and 40 are produced, for example, through the following steps 1 to 3.

(1) Si particles and an inorganic compound containing Si such as lithium silicate or silicon oxide are mixed at a predetermined mass ratio. The inorganic compound becomes oxide phases 36 and 41. Generally, when the Si-based active material 35 is produced, the mixing ratio of Si particles is higher than that in the case of producing the Si-based active material 40.

(2) The raw material powder is pulverized and mixed using a ball mill or the like in an inert atmosphere, and then heat-treated (sintered) at, for example, 500°C to 700°C. By pulverizing and classifying the sintered body so that D50 is within a predetermined range, mother particles in which Si particles are dispersed in the oxide phase are obtained.

(3) Next, the mother particles are mixed with a carbon material such as coal pitch and heat-treated in an inert atmosphere. In this way, Si-based active materials 35 and 40 having a conductive coating such as a carbon coating formed on the surface of the mother particles are obtained.

[Separator]

A porous sheet having ion permeability and insulating property is used for the separator 50. Specific examples of the porous sheet include a microporous thin film, a woven fabric, and a non-woven fabric. As the material of the separator 50, an olefin resin such as polyethylene or polypropylene, cellulose or the like is suitable. The separator 50 may have either a single-layer structure or a laminated structure. A heat-resistant layer or the like may be formed on the surface of the separator 50.

EXAMPLES

The present disclosure will be further described below with reference to Examples, but the present disclosure is not limited to these Examples.

<Example 1>

[Preparation of Positive Electrode]

As the positive electrode active material, a lithium-containing metal composite oxide represented by $LiCo_{0.979}Zr_{0.001}Mg_{0.01}Al_{0.01}O_2$ was used. The positive electrode active material, carbon black, and polyvinylidene fluoride (PVdF) were mixed at a solid content mass ratio of 95: 2.5: 2.5 to prepare a positive electrode mixture slurry using N-methyl-2-pyrrolidone (NMP) as the dispersion medium. The positive electrode mixture slurry was applied to both sides of a long positive electrode core body made of aluminum foil by the doctor blade method, the coating film was dried, and then the coating film was compressed with a roller to form a positive electrode mixture layer on both sides of the positive electrode core body. A positive electrode core body on which a positive electrode mixture layer was formed was cut into a predetermined electrode size to prepare a positive electrode.

[Preparation of the First Si-based Active Material]

In an inert atmosphere, Si particles (3N, 10 $\mu$m pulverized product) and lithium silicate particles (10 $\mu$m pulverized product) represented by $Li_{2z}SiO_{(2+z)}$ (0 <z <2) were mixed so as to have the Si particle content of 52% by mass, and pulverized by a ball mill. Then, the mixed powder was taken out in an inert atmosphere and heat-treated under the conditions of 600°C for 4 hours in an inert atmosphere. The heat-treated powder (hereinafter referred to as mother particles) was pulverized by a jet mill, mixed with coal pitch, and heat-treated under the conditions of 800°C for 5 hours in an inert atmosphere to form a conductive coating of carbon on the surface of the mother particles. The amount of carbon coated was 2% by mass based on the total mass of the particles including the mother particles and the conductive coating. The particles on which the conductive coating was formed were disintegrated and classified using a sieve to obtain the first Si-based active material having a D50 of 11 $\mu$m in which Si particles were dispersed in an amount of 52% by mass in the lithium silicate phase.

[Preparation of Second Si-based Active Material]

In an inert atmosphere, Si particles (3N, 10 $\mu$m pulverized product) and silicon dioxide particles (10 $\mu$m pulverized product) were mixed so as to have the Si particle content of 30% by mass, and pulverized by a ball mill. Then, the mixed powder was taken out in an inert atmosphere and heat-treated under the conditions of 600°C for 4 hours in an inert atmosphere. The heat-treated powder (hereinafter referred to as mother particles) was pulverized by a jet mill, and then a conductive coating of carbon was formed on the surface of the mother particles by CVD method (1000°C). The amount of carbon coated was 5% by mass based on the total mass of the particles including the mother particles and the conductive coating. The particles on which the conductive coating was formed were disintegrated and classified using a sieve to obtain the second Si-based active material having a D50 of 5 $\mu$m in which Si particles were dispersed in an amount of 30% by mass in the silicon dioxide phase.

[Analysis of Si-based Active Material]

The particle cross section of the Si-based active material was observed by SEM, and it was confirmed that the Si particles were approximately uniformly dispersed in the oxide phase. The average particle size of the Si particles was less than 50 nm. The amount of carbon coated was analyzed by CZ analyzer. The D50 of the Si-based active material was measured using a laser diffraction particle size distribution measuring device (SALD-2000A, manufactured by Shimadzu Corporation). Water was used as the dispersion medium, and the refractive index of the particles was measured as 1.70-0.01i.

[Preparation of Negative Electrode]

A mixture of graphite (carbon-based active material) having a D50 of 22 $\mu$m, the first Si-based active material, and the second Si-based active material in a mass ratio of 95: 3: 2 was used as the negative electrode active material. The negative electrode active material, the sodium salt of carboxymethyl cellulose (CMC-Na), and the dispersion of styrene-butadiene rubber (SBR) were mixed at a solid content mass ratio of 97.5: 1.5: 1.0 to prepare a negative electrode mixture slurry with water as a dispersion medium. Next, the negative electrode mixture slurry was applied to both sides of the negative electrode core body made of copper foil using a doctor blade method, the coating film was dried, and then compressed using a roller to form a negative electrode mixture layer on both sides of the negative electrode core body. The negative electrode core body on which the negative electrode mixture layer was formed was cut into a predetermined electrode size to prepare a negative electrode.

[Preparation of Non-aqueous Electrolyte]

The non-aqueous electrolyte was prepared by adding $LiPF_6$ to a mixed solvent in which ethylene carbonate (EC) and methyl ethyl carbonate (MEC) were mixed at a volume ratio of 3:7 (25°C, 1 atm) to a concentration of 1 mol/L, and by further adding vinylene carbonate to a concentration of 2% by mass.

[Preparation of Battery]

A positive electrode lead and a negative electrode lead were attached to the positive electrode and the negative electrode, respectively, and the positive electrode and the negative electrode were wound through a separator made of a polyethylene microporous film. A polypropylene tape was attached to the outermost peripheral surface of the wound assembly, and then the wound assembly was pressed radially to prepare a flat wound electrode assembly. Under an argon atmosphere, the electrode assembly and the non-aqueous electrolyte were housed in a cup-shaped housing part of an external packaging composed of a laminated sheet having a five-layer structure of a polypropylene layer / adhesive layer / aluminum alloy layer / adhesive layer / polypropylene layer. Subsequently, the electrode assembly was impregnated with electrolyte solution by depressurizing the inside of the external packaging, and the opening of the external packaging was sealed to prepare a non-aqueous electrolyte secondary battery with a height of 62 mm, width of 35 mm, and thickness of 3.6 mm.

<Example 2>

A non-aqueous electrolyte secondary battery was prepared in the same manner as in Example 1 except that in the preparation of the first Si-based active material, the blending ratio of the raw materials was adjusted so that the content of Si particles was 45% by mass.

<Example 3>

A non-aqueous electrolyte secondary battery was prepared in the same manner as in Example 1 except that in the preparation of the first Si-based active material, the blending ratio of the raw materials was adjusted so that the content of Si particles was 59% by mass.

<Example 4>

A non-aqueous electrolyte secondary battery was prepared in the same manner as in Example 1 except that in the preparation of the first Si-based active material, the particles were disintegrated and classified so that the D50 was 8 $\mu$m.

<Example 5>

A non-aqueous electrolyte secondary battery was prepared in the same manner as in Example 1 except that in the preparation of the first Si-based active material, the particles were disintegrated and classified so that the D50 was 15 $\mu$m.

<Example 6>

A non-aqueous electrolyte secondary battery was prepared in the same manner as in Example 1 except that in the preparation of the second Si-based active material, the particles were disintegrated and classified so that the D50 was 3 μm.

<Example 7>

A non-aqueous electrolyte secondary battery was prepared in the same manner as in Example 1 except that in the preparation of the second Si-based active material, the particles were disintegrated and classified so that the D50 was 6 μm.

<Example 8>

A non-aqueous electrolyte secondary battery was prepared in the same manner as in Example 1 except that in the preparation of the negative electrode, the mixing ratio of graphite, the first Si-based active material, and the second Si-based active material was 90: 6: 4.

<Example 9>

A non-aqueous electrolyte secondary battery was prepared in the same manner as in Example 1 except that in the preparation of the negative electrode, the mixing ratio of graphite, the first Si-based active material, and the second Si-based active material was 96: 2: 2.

<Comparative Example 1>

A non-aqueous electrolyte secondary battery was prepared in the same manner as in Example 1 except that in the preparation of the first and second Si-based active materials, the particles were disintegrated and classified so that the D50 was 5 μm in both cases.

<Comparative Example 2>

A non-aqueous electrolyte secondary battery was prepared in the same manner as in Example 1, except that in the preparation of the first Si-based active material, the particles were disintegrated and classified so that the D50 was 5 μm, and in the preparation of the second Si-based active material, the particles were disintegrated and classified so that the D50 was 10 μm.

[Evaluation of Capacity Retention (Cycle Characteristics)]

Each battery in Examples and Comparative Examples was charged at a constant current of 1 It (800 mA) under a temperature environment of 25°C until the battery voltage reached 4.2 V, and then charged at a constant voltage until the current value reached 40 mA at 4.2 V. Then, the battery was discharged at a constant current of 800 mA until the battery voltage reached 2.75 V. This charging and discharging was performed for 300 cycles, and the capacity retention was calculated based on the following formula.

$$\text{Capacity retention} = (\text{Discharge capacity at the 300th cycle} / \text{Discharge capacity at the 1st cycle}) \times 100$$

[Table 1]

| | First Si-based active material | | | Second Si-based active material | | | Battery characteristics |
|---|---|---|---|---|---|---|---|
| | Amount added | Si particles | D50 | Amount added | Si particles | D50 | Capacity retention |
| Example 1 | 3% by mass | 52% by mass | 11μm | 2% by mass | 30% by mass | 5μm | 74.9% |
| Example 2 | 3% by mass | 45% by mass | 11μm | 2% by mass | 30% by mass | 5μm | 72.0% |
| Example 3 | 3% by mass | 59% by mass | 11μm | 2% by mass | 30% by mass | 5μm | 71.5% |
| Example 4 | 3% by mass | 52% by mass | 8μm | 2% by mass | 30% by mass | 5μm | 73.5% |
| Example 5 | 3% by mass | 52% by mass | 15μm | 2% by mass | 30% by mass | 5μm | 72.8% |
| Example 6 | 3% by mass | 52% by mass | 11μm | 2% by mass | 30% by mass | 3μm | 72.1% |
| Example 7 | 3% by mass | 52% by mass | 11μm | 2% by mass | 30% by mass | 6μm | 73.0% |
| Example 8 | 6% by mass | 52% by mass | 11μm | 4% by mass | 30% by mass | 5μm | 70.3% |
| Example 9 | 2% by mass | 52% by mass | 11μm | 2% by mass | 30% by mass | 5μm | 77.1% |
| Comparative Example 1 | 3% by mass | 52% by mass | 5μm | 2% by mass | 30% by mass | 5μm | 65.0% |
| Comparative Example 2 | 3% by mass | 52% by mass | 5μm | 2% by mass | 30% by mass | 10μm | 63.4% |

As can be understood from the results shown in Table 1, all the batteries of Examples have superior cycle characteristics with higher capacity retention after 300 cycles compared with the batteries of Comparative Examples. Even when two Si-based active materials (first and second Si-based active materials) with different content of Si particles are used, good cycle characteristics cannot be achieved when the D50 of the first and second Si-based active materials is the same (Comparative Example 1) and when the D50 of the first Si-based active material is smaller than the D50 of the second Si-based active material (Comparative Example 2).

REFERENCE SIGNS LIST

10 non-aqueous electrolyte secondary battery
11 external packaging
11a, 11b laminated sheet
12 housing part
13 sealed part
14 electrode assembly
15 positive electrode lead
16 negative electrode lead
20 positive electrode
21 positive electrode core body
22 positive electrode mixture layer
30 negative electrode

31 negative electrode core body
32 negative electrode mixture layer
33 carbon-based active material
35 first Si-based active material
36,41 oxide phase
37,42 Si particles
38,43 mother particles
39,44 conductive coating
40 second Si-based active material
50 separator

**Claims**

1. A negative electrode (30) for a non-aqueous electrolyte secondary battery (10), including as negative electrode active material:

   a carbon-based active material (33); and
   a Si-based active material in which Si particles (37, 42) are dispersed in an oxide phase (36, 41) containing at least silicon (Si),
   wherein the Si-based active material includes a first Si-based active material (35) and a second Si-based active material (40), and
   wherein the first Si-based active material (35) has a larger volume-based median diameter and a higher content of the Si particles (37, 42) than the second Si-based active material (40).

2. The negative electrode (30) for a non-aqueous electrolyte secondary battery (10) according to claim 1, wherein the volume-based median diameter of the first Si-based active material (35) is 8 $\mu$m to 15 $\mu$m, and the volume-based median diameter of the second Si-based active material (40) is 3 $\mu$m to 6 $\mu$m, whereby the D50 of the Si-based active material was measured using a laser diffraction particle size distribution measuring device, SALD-2000A, manufactured by Shimadzu Corporation.

3. The negative electrode (30) for a non-aqueous electrolyte secondary battery (10) according to claim 1 or 2, wherein a content of the Si-based active material (35) is 4 to 10% by mass based on a total mass of the negative electrode active material.

4. The negative electrode (30) for a non-aqueous electrolyte secondary battery (10) according to any one of claims 1 to 3, wherein the oxide phase (36, 41) is mainly composed of at least one of lithium silicate and silicon oxide.

5. The negative electrode (30) for a non-aqueous electrolyte secondary battery (10) according to claim 4, wherein the oxide phase (36) of the first Si-based active material (35) is mainly composed of the lithium silicate, and the oxide phase (41) of the second Si-based active material (40) is mainly composed of the silicon oxide.

6. A non-aqueous electrolyte secondary battery (10), comprising:

   the negative electrode (30) according to any one of claims 1 to 5;
   a positive electrode (20); and
   a non-aqueous electrolyte.

**Patentansprüche**

1. Negative Elektrode (30) für eine Sekundärbatterie (10) mit nichtwässrigem Elektrolyt, beinhaltend als aktives Material der negativen Elektrode:

   ein aktives Material (33) auf Kohlenstoffbasis; und
   ein aktives Material auf Si-Basis, in dem Si-Teilchen (37, 42) in einer Oxidphase (36, 41) verteilt sind, enthaltend mindestens ein Silizium (Si),
   wobei das aktive Material auf Si-Basis ein erstes aktives Material (35) auf Si-Basis und ein zweites aktives Material (40) auf Si-Basis beinhaltet, und

wobei das erste aktive Material (35) auf Si-Basis einen größeren mittleren Durchmesser auf Volumenbasis und einen höheren Gehalt der Si-Teilchen (37, 42) als das zweite aktive Material (40) auf Si-Basis aufweist.

2. Negative Elektrode (30) für eine Sekundärbatterie (10) mit nichtwässrigem Elektrolyt nach Anspruch 1, wobei der mittlere Durchmesser auf Volumenbasis des ersten aktiven Materials (35) auf Si-Basis 8 $\mu$m bis 15 $\mu$m beträgt, und der mittlere Durchmesser auf Volumenbasis des zweiten aktiven Materials (40) auf Si-Basis 3 $\mu$m bis 6 $\mu$m beträgt, wobei der D50 des aktiven Materials auf Si-Basis unter Verwendung einer Laserbeugungsteilchengrößenverteilungsmessvorrichtung, SALD-2000A, hergestellt von der Shimadzu Corporation, gemessen wurde.

3. Negative Elektrode (30) für eine Sekundärbatterie (10) mit nichtwässrigem Elektrolyt nach Anspruch 1 oder 2, wobei ein Gehalt des aktiven Materials (35) auf Si-Basis 4 bis 10 Massen-% beträgt, bezogen auf eine Gesamtmasse des aktiven Materials der negativen Elektrode.

4. Negative Elektrode (30) für eine Sekundärbatterie (10) mit nichtwässrigem Elektrolyt nach einem der Ansprüche 1 bis 3, wobei die Oxidphase (36, 41) sich vorwiegend aus mindestens einem von Lithiumsilikat und Siliziumoxid zusammensetzt.

5. Negative Elektrode (30) für eine Sekundärbatterie (10) mit nichtwässrigem Elektrolyt nach Anspruch 4, wobei die Oxidphase (36) des ersten aktiven Materials (35) auf Si-Basis sich vorwiegend aus dem Lithiumsilikat zusammensetzt, und

die Oxidphase (41) des zweiten aktiven Materials (40) auf Si-Basis sich vorwiegend aus dem Siliziumoxid zusammensetzt.

6. Sekundärbatterie (10) mit nichtwässrigem Elektrolyt, umfassend:

die negative Elektrode (30) nach einem der Ansprüche 1 bis 5;
eine positive Elektrode (20); und
einen nichtwässrigen Elektrolyt.

## Revendications

1. Electrode négative (30) pour une batterie rechargeable à électrolyte non aqueux (10), contenant, en tant que matériau actif d'électrode négative :

un matériau actif à base de carbone (33) ; et
un matériau actif à base de Si dans lequel des particules de Si (37, 42) sont dispersées dans une phase d'oxyde (36, 41) contenant au moins du silicium (Si),
dans laquelle le matériau actif à base de Si contient un premier matériau actif à base de Si (35) et un deuxième matériau actif à base de Si (40), et
dans laquelle le premier matériau actif à base de Si (35) a un diamètre médian en volume supérieur et une teneur en particules de Si (37, 42) supérieure à ceux du deuxième matériau actif à base de Si (40).

2. Electrode négative (30) pour une batterie rechargeable à électrolyte non aqueux (10) selon la revendication 1, dans laquelle le diamètre médian en volume du premier matériau actif à base de Si (35) est de 8 $\mu$m à 15 $\mu$m, et le diamètre médian en volume du deuxième matériau actif à base de Si (40) est de 3 $\mu$m à 6 $\mu$m, moyennant quoi la valeur D50 du matériau actif à base de Si a été mesurée par utilisation d'un dispositif de mesure de distribution de granulométrie par diffraction de laser, SALD-2000A, fabriqué par Shimadzu Corporation.

3. Electrode négative (30) pour une batterie rechargeable à électrolyte non aqueux (10) selon la revendication 1 ou 2, dans laquelle la teneur en le matériau actif à base de Si (35) est de 4 à 10 % en masse par rapport à la masse totale du matériau actif d'électrode négative.

4. Electrode négative (30) pour une batterie rechargeable à électrolyte non aqueux (10) selon l'une quelconque des revendications 1 à 3, dans laquelle la phase d'oxyde (36, 41) est principalement composée d'au moins l'un parmi le silicate de lithium et l'oxyde de silicium.

**5.** Electrode négative (30) pour une batterie rechargeable à électrolyte non aqueux (10) selon la revendication 4, dans laquelle la phase d'oxyde (36) du premier matériau actif à base de Si (35) est principalement composée de silicate de lithium, et
la phase d'oxyde (41) du deuxième matériau actif à base de Si (40) est principalement composée d'oxyde de silicium.

**6.** Batterie rechargeable à électrolyte non aqueux (10) comprenant :

l'électrode négative (30) selon l'une quelconque des revendications 1 à 5 ;
une électrode positive (20) ; et
un électrolyte non aqueux.

Figure 1

Figure 2

Figure 3

**EP 3 859 828 B1**

**REFERENCES CITED IN THE DESCRIPTION**

**Patent documents cited in the description**

- WO 2016035290 A
- WO 2016121321 A
- US 2017309950 A1
- EP 3038193 A1
- WO 2017085902 A1
- WO 2018123751 A1
- EP 2559660 A1